# EUROPEAN PATENT SPECIFICATION

(11) **EP 1 302 721 B1**
(45) Date of publication and mention of the grant of the patent: **08.11.2006**
(21) Application number: 02396140.2
(22) Date of filing: 13.09.2002
(51) Int. Cl.: F21V 19/00, F21W 101/14

(54) **Bulb holder**
Lampenfassung
Douille d'ampoule

(30) Priority: 10.10.2001 FI 20011971
(43) Date of publication of application: 16.04.2003
(73) Proprietor: Oy B. Herrmans Ab, 68600 Pietarsaari (FI)
(72) Inventor: Byggmästar, Klas, 68580 Furuholmen (FI)
(74) Representative: Pelin, Torolf Johannes

(56) References cited:
- FR-A- 2 284 821
- US-A- 1 770 724
- US-A- 4 219 870
- US-A- 4 774 645

## Description

This invention relates to a holder for a bulb, whereby the bulb is connected to a reflector for example for vehicular lamps and wherein the reflector has its rear provided with brackets of such a design that a cap flange of the bulb, and recesses present therein, fit in the brackets in such a way that the bulb sets in its position.

At present, bulbs are connected by means of various rotatable socket solutions, plates, and various hinged spring systems. In prior art document US 4 774 645 is presented a replaceable lamp bulb assembly which comprises a reflector and a plug body in which a lamp bulb is secured and which is detachably mounted to the reflector. The plug body has a flange movable inside the inner circumferential surface of a socket formed on the back of the reflector. The flange has one end face thereof that is to be in contact with the outer circumferential edge of the opening formed in the apex of the reflector, and the other end face that is to be in contact with one surface of the wedge-shaped portion of the cleat. The other surface of the cleat, namely, the slanted surface thereof, is so formed as to act as wedge on the guide surface of guide member. When the plug body is fully inserted in the socket, the cleat is inserted from a direction substantially perpendicular to axial direction while the other surface of the flange is axially pressed by the wedge-shaped portions of the cleat, whereby the plug body is retained to the reflector.

All these prior known solutions are complicated, expensive and difficult to use. It is an object of the invention to provide a novel type of bulb holder, which is simple, economical and easy to use. A holder of the invention is characterized in that the bracket is provided with opposing lips, against which the cap flange sets and is securable to the lips by means of U-shaped gripping jaws. This type of holder, whose jaws are further connected to each other with a web plate, to which is fastened a grounding wire by means of a bayonet coupling, is convenient in use and cannot fall down even if the grip is lost in the process of replacing the bulb. Since the lips are further provided with clamping recesses, wherein the complementary clamping prongs present in the clamp jaws fit in a locking position, the holder cannot get loose despite vibration. The reflector can be manufactured by compression moulding from light metal, plastics, or sheet metal. The clamp jaws are made from flexible sheet metal.

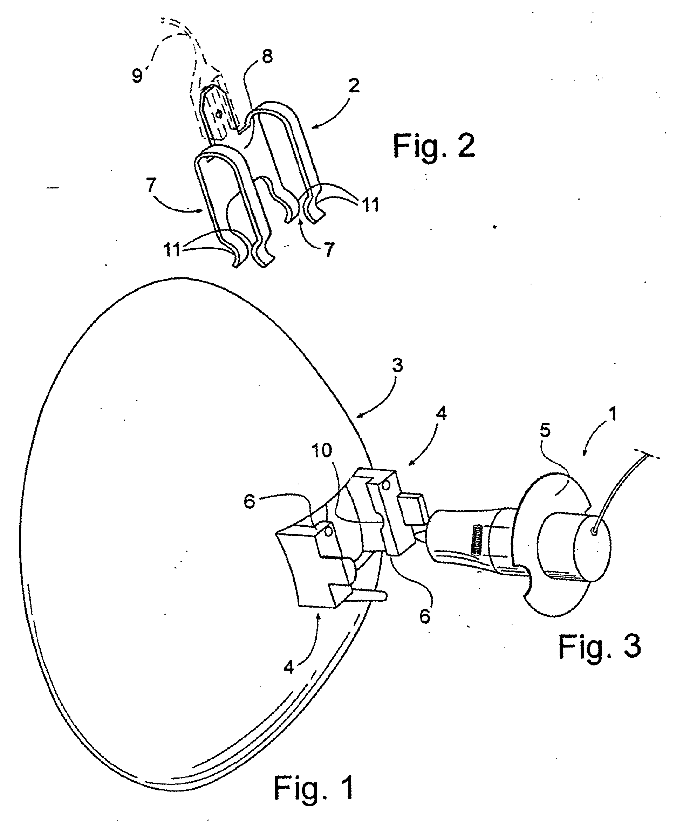

The invention will now be described by way of example with reference to the accompanying drawing, in which fig. 1 shows a reflector for a vehicular lamp, fig. 2 shows a holder, and fig. 3 shows a bulb.

A holder 2 for a bulb 1 is used for connecting the bulb to a lamp reflector 3. The reflector 3 has its rear provided with a bracket, designed in such a way that a cap flange 5 of the bulb and recesses present therein fit in the bracket 4 so as to set the bulb in position. The bracket 4 is provided with opposing lips 6, against which the cap flange 5 sets and is securable to the lips (6) by means of U-shaped gripping jaws 7 of the holder 2. The gripping jaws 7 are connected to each other by means of a web plate 8, to which is also attached a grounding wire 9 with a bayonet coupling. The lips 6 are provided with clamping recesses 10, with complementary clamping prongs 11 present in the clamp jaws 7 fitting therein in a locking position.

## Claims

1. A light assembly comprising:
a reflector (3) having a bracket (4) extending from a rear end thereof, the bracket (4) including a pair of lips (6) each having front and rear surfaces, and a pair of projections;
a bulb (1) including a front portion positioned and extending between the lips (6) of the bracket (4), and a cap flange (5) engaging the rear surface of the lips (6), the cap flange (5) including a plurality of recesses, each of the recesses receiving a respective one of the projections of the bracket (4) to prevent rotation of the bulb (1); and
a holder (2) for securing the bulb (1) to the bracket (4), the holder (2) comprising a pair of U-shaped gripping jaws (7) interconnected by a web plate (8) each gripping jaw (7) including front and rear legs, the front legs arranged to engage the front surfaces of respective lips (6) of the bracket (4) the rear legs arranged to engage a rear surface of the cap flange (5), the holder (2) further including an electric terminal adapted for receiving a power supply connector.

2. The light assembly according to claim 1 wherein the front surfaces of the lips (6) include respective recesses (10) each of the front legs including a pron (11) received in a respective recess (10).

3. The light assembly according to claim 1 wherein the power supply connector is a ground wire (9).

4. The light assembly according to claim 3 wherein the electric terminal is located on the web plate (8).

5. The light assembly according to claim 3 wherein the power supply connector is connected by a bayonet coupling.

## Patentansprüche

1. Leuchtanordnung, umfassend:
einen Reflektor (3), der einen von seinem Hinterende abstehenden Träger (4) aufweist, wobei der Träger (4) ein Paar von Lippen (6), die jeweils Vorder- und Rückseiten aufweisen, sowie ein Paar von Vorsprüngen enthält;
eine Birne (1), die einen vorderen Abschnitt, der zwischen den Lippen (6) des Trägers (4) angeordnet ist und sich dazwischen erstreckt, sowie einen Kappenflansch (5), der an die Rückseite der Lippen (6) angreift, enthält, wobei der Kappenflansch (5) eine Mehrzahl von Ausnehmungen aufweist, wobei jede der Ausnehmungen einen entsprechenden der Vorsprünge des Trägers (4) aufnimmt, um eine Drehung der Birne (1) zu verhindern; und
einen Halter (2) zum Sichern der Birne (1) an dem Träger (4), wobei der Halter (2) ein Paar U-förmiger Greifbacken (7) aufweist, die durch eine Stegplatte (8) miteinander verbunden sind, wobei jeder Greifbacken (7) vordere und hintere Schenkel aufweist, wobei die vorderen Schenkel angeordnet sind, um an Vorderseiten jeweiliger Lippen (6) des Trägers (4) anzugreifen, wobei die hinteren Schenkel angeordnet sind, um an eine Rückseite des Kappenflanschs (5) anzugreifen, wobei der Halter (2) ferner einen elektrischen Anschluss enthält, der zur Aufnahme eines Stromversorgungssteckers ausgelegt ist.

2. Leuchtanordnung nach Anspruch 1, worin die Vorderseiten der Lippen (6) jeweilige Ausnehmungen (10) enthalten, wobei jeder der vorderen Schenkel einen Zinken (11) aufweist, der in einer entsprechenden Ausnehmung (10) aufgenommen ist.

3. Leuchtanordnung nach Anspruch 1, worin der Stromversorgungsstecker ein Massedraht (9) ist.

4. Leuchtanordnung nach Anspruch 3, worin der elektrische Anschluss an der Stegplatte (8) angeordnet ist.

5. Leuchtanordnung nach Anspruch 3, worin der Stromversorgungsstecker durch eine Bajonettkupplung angeschlossen ist.

## Revendications

1. Système d'éclairage comprenant :
un réflecteur (3) ayant un support (4) s'étendant depuis une extrémité arrière de celui-ci, le support (4) comportant une paire de lèvres (16) ayant chacune des surfaces avant et arrière, et une paire de saillies ; une ampoule (1) comportant une partie avant placée et s'étendant entre les lèvres (6) du support (4), et une collerette formant chapeau (5) au contact de la surface arrière des lèvres (6), la collerette (5) formant chapeau comportant une pluralité d'évidements, chacun des évidements recevant l'une, respective, des saillies du support (4) pour empêcher l'ampoule (1) de tourner ; et
un porte-ampoule (2) servant à fixer l'ampoule (1) au support (4), le porte-ampoule (2) comportant une paire de mâchoires de serrage (7), en U, reliées l'une à l'autre par une plaque en bande (8), chaque mâchoire de serrage (7) comportant des branches avant et arrière, les branches avant étant destinées à s'engager sur les surfaces avant des lèvres respectives (6) du support (4), les branches arrière étant destinées à s'engager sur une surface arrière de la collerette formant chapeau (5), le porte-ampoule (2) comportant en outre une borne électrique destinée à recevoir un connecteur d'alimentation électrique.

2. Système d'éclairage selon la revendication 1, dans lequel les surfaces avant des lèvres (6) comportent des évidements respectifs (10), chacune des branches avant comportant une patte (11) reçue dans un évidement respectif (10).

3. Système d'éclairage selon la revendication 1, dans lequel le connecteur d'alimentation électrique est un fil de terre (9).

4. Système d'éclairage selon la revendication 3, dans lequel la borne électrique est située sur la plaque en bande (8).

5. Système d'éclairage selon la revendication 3, dans lequel le connecteur d'alimentation électrique est connecté par un accouplement à baïonnette.
